# EUROPÄISCHE PATENTSCHRIFT

(11) **EP 3 289 935 B1**
(45) Veröffentlichungstag und Bekanntmachung des Hinweises auf die Patenterteilung: **21.08.2019**
(21) Anmeldenummer: 17180156.6
(22) Anmeldetag: 07.07.2017
(51) Int. Cl.: A47J 31/02

(54) **FILTERGEFÄSS**
FILTER CONTAINER
RÉCIPIENT FILTRANT

(30) Priorität: 29.08.2016 DE 102016116074
(43) Veröffentlichungstag der Anmeldung: 07.03.2018
(73) Patentinhaber: Melitta Europa GmbH & Co. KG, 32427 Minden (DE)
(72) Erfinder: SACHTLEBEN, Andreas, 32427 Minden (DE); SCHÄFER, Markus, 32825 Blomberg (DE)
(74) Vertreter: Dantz, Jan Henning

(56) Entgegenhaltungen:
- DE-B1- 2 609 606
- DE-C- 635 095
- DE-C- 652 010
- DE-U1- 20 307 572
- US-A- 3 334 574

## Beschreibung

Die vorliegende Erfindung betrifft ein Filtergefäß zur Aufnahme eines aus wasserdurchlässigem Material hergestellten Filtereinsatzes, der mit Kaffeemehl befüllbar ist, wobei das Filtergefäß nach oben aufspreizende Seitenwände und einen Boden umfasst, an dem ein Filtrat durch mindestens zwei Öffnungen ablaufen kann, wobei in einem mittleren Bereich des Bodens ein Trennelement vorgesehen ist, das den Bereich oberhalb des Bodens in zwei etwa gleich große Ablaufräume unterteilt, wobei jedem Ablaufraum mindestens eine Öffnung zum Ablaufen des Filtrats zugeordnet ist.

Die DE 652 010. Ein Filtergefäß mit den Merkmalen des Oberbegriffes des Anspruches 1, das in der Gestaltung seiner Form einem Filterpapierelement entspricht, um eine vollflächige Anlage für Filterpapier sicherzustellen. Der Boden des Filtergefäßes ist dabei oval ausgebildet. Das Filtergefäß ist allseitig verrippt, einschließlich einer in Längsrichtung parallel zur Filterunterkante verlaufenden Rippe, die mit den dazu lotrecht an den Seitenwänden hochlaufenden Wandungsrippen verbunden ist und den eingelegten Filter stabilisiert. In einer anderen Ausführung fehlt dieses Merkmal, stattdessen ist ein durchgängiger Schlitz als Auslasselement des Filtrates gezeigt. Eine Möglichkeit, das Filtrat gleichzeitig in zwei verschiedene Behälter zu leiten, besteht nicht.

Die DE 635095 zeigt ein halbkugelförmiges Filtergefäß mit einer vollständig verrippten Innenkontur, welche bevorzugt eingesetzt wird, um zu verhindern, dass sich das verwendete kreisrund geschnittene Filterpapier an der Innenwandung des Filtergefäßes anlegt und somit die Filterwirkung behindert wird.

Die DE 203 07 572 zeigt einen Kaffeefilter, der durch seine Konstruktion die Möglichkeit eröffnet, ein Filtrat mittels eines Filterträgers über zwei Ablauföffnungen in zwei getrennte Behälter einzufüllen.

Die DE 26 09 606 offenbart ein Filtergefäß zur Herstellung eines Filtrates, insbesondere Kaffee, wobei ein Filterpapiereinsatz in das Filtergefäß einsetzbar ist. An dem Filtergefäß sind an den Innenwänden Rippen vorgesehen, die für eine Beabstandung des Filterpapiereinsatzes von den Seitenwänden sorgen, so dass das Filtrat sich in einem nutförmigen Bodenbereich sammeln kann und über eine Ablauföffnung einem Gefäß zugeführt wird. Solche Filtergefäße haben sich an sich bewährt, allerdings besteht der Nachteil, dass das Filtrat nur in ein Auffanggefäß geleitet wird. Wird eine größere Menge des Kaffeefiltrates zubereitet, beispielsweise für zwei Personen, muss das Kaffeefiltrat zunächst in ein größeres Zwischengefäß geleitet werden, um dann eine Aufteilung auf zwei Tassen vornehmen zu können.

Zur Erhöhung der Ausflussmenge können bei solchen Filtergefäßen auch zwei oder mehr Öffnungen im Bodenbereich vorgesehen werden, allerdings kann die Durchlaufmenge an den einzelnen Ablauföffnungen unterschiedlich sein. Gerade wenn eine Ablauföffnung durch einen Filterpapiereinsatz teilweise verdeckt wird, kann eine gleichmäßige Befüllung von zwei Tassen nicht reproduzierbar gewährleistet werden.

Es ist daher Aufgabe der vorliegenden Erfindung, ein Filtergefäß zur Aufnahme eines aus wasserdurchlässigem Material hergestellten Filtereinsatzes zu schaffen, mittels dem auch eine gleichmäßige Befüllung von zwei Gefäßen gleichzeitig möglich ist.

Diese Aufgabe wird mit einem Filtergefäß mit den Merkmalen des Anspruches 1 gelöst. Vorteilhafte Ausgestaltungen ergeben sich aus den Unteransprüchen.

Bei dem erfindungsgemäßen Filtergefäß ist im mittleren Bereich des Bodens ein Trennelement vorgesehen, das den Bereich oberhalb des Bodens in zwei etwa gleich große Ablaufräume unterteilt, wobei jedem Ablaufraum mindestens eine Öffnung zum Ablaufen des Filtrates zugeordnet ist. Dadurch kann das Filtrat gleichmäßig über beide Ablaufräume ausströmen, so dass eine im Wesentlichen gleich große Aufteilung des Filtrates erfolgt, so dass auch zwei Gefäße gleichzeitig befüllt werden können. Erfindungsgemäß ist an jedem Ablaufraum ein zur Öffnung hin abfallender Boden vorgesehen.
Die Neigung des Bodens zur Horizontalen kann in einem Winkel zwischen 3° bis 30°, insbesondere 5° bis 20°, sein, so dass eine sichere Zufuhr der Flüssigkeit zur Öffnung gewährleistet wird. Die Öffnungen können hierfür einen Abstand aufweisen, der eine Positionierung auf zwei nebeneinander stehenden Gefäßen ermöglicht, aber alternativ auch eine Positionierung des Filtergefäßes auf nur einem Gefäß, falls keine Aufteilung des Filtrats gewünscht wird. Der Abstand der Öffnungen kann beispielsweise in einem Bereich zwischen 2 cm und 5 cm liegen.

Vorzugsweise ist beim Einlegen eines Filtereinsatzes eine Unterkante des Filtereinsatzes auf dem Trennelement abstützbar, so dass bei einer Befüllung des Filtereinsatzes die Unterkante sich auf beiden Seiten des Trennelementes nach unten wölbt und dadurch beide Ablaufräume mit Filtrat versorgt werden. Das Trennelement ist dabei mittig an dem Boden vorgesehen, so dass eine gleichmäßige Versorgung der Ablaufräume gewährleistet ist, wenn der Flüssigkeitsstand in dem Filtereinsatz das Kaffeemehl extrahiert.

Das Trennelement kann beispielsweise als Trennwand ausgebildet sein. Statt einer Trennwand kann auch eine Wölbung oder ein Trennwulst vorgesehen sein, der eine Aufteilung des Bodenbereiches in zwei Ablaufräume vornimmt.

Um den Filtereinsatz von den Seitenwänden zu beabstanden, können an den aufspreizenden Seitenwänden des Filtergefäßes an der Innenseite zum Boden hin erstreckende Rippen vorgesehen sein. Damit das Strömungsverhalten in dem Bereich der Seitenwände eine gleichmäßige Versorgung der Ablaufräume gewährleistet, können die Rippen zu einer vertikalen Ebene durch das Trennelement symmetrisch angerordnet sein.

In einer weiteren Ausgestaltung ist mindestens eine Bodenrippe von dem Trennelement zur Öffnung gerichtet angeordnet. Durch solche Bodenrippen kann eine Verwirbelung des Filtrates im Bereich des Trennelementes vermieden werden, wobei das Trennelement vorzugsweise höher ausgebildet ist als die Bodenrippe, um eine Abstützung des Filtereinsatzes über das Trennelement zu gewährleisten.

Um ein Abströmen des Filtrates nach unten zu gewährleisten, kann an jeder Öffnung ein Leitelement für das Filtrat vorgesehen sein. Das Leitelement ist beispielsweise als Steg ausgebildet, der in die Öffnung ragt und sich bis unterhalb der Wände an der Öffnung erstreckt, so dass die Abtropfrichtung über das Leitelement vorgegeben wird.

Vorzugsweise weist das Filtergefäß an der Unterseite einen Auflageteller auf, der einen nach unten gerichteten Rand umfasst, der als Anschlag dienen kann, um ein Verschieben des Filtergefäßes beim Brühen zu vermeiden. Um eine exakte Positionierung des Filtergefäßes an einem oder zwei Behältern überprüfen zu können, kann an dem Auflageteller und/oder dem Rand ein Ausschnitt oder ein Sichtfenster vorgesehen sein, so dass die Positionierung des Trennelementes oder der Öffnungen überprüft werden kann.

An der Unterseite des Filtergefäßes können Mittel zur Positionierung vorgesehen sein, insbesondere nach unten gerichtete Stege, um eine Positionierung auf einem oder zwei Behältern vornehmen zu können.

Die Erfindung wird nachfolgend anhand eines Ausführungsbeispiels mit Bezug auf die beigefügten Zeichnungen näher erläutert. Es zeigen:
- Figur 1: eine perspektivische Explosionsdarstellung eines erfindungsgemäßen Filtergefäßes beim Einsetzen eines Filtereinsatzes;
- Figur 2: eine geschnittene Ansicht des Filtergefäßes der Figur 1 mit eingesetztem Filtereinsatz;
- Figur 3: eine Ansicht des Filtergefäßes auf zwei Behältern;
- Figur 4: eine Ansicht des Filtergefäßes auf nur einem Behälter;
- Figur 5: eine Ansicht des Filtergefäßes auf einer Kanne;
- Figuren 6A bis 6D: mehrere Ansichten des Innenbereichs des Filtergefäßes;
- Figuren 7A und 7B: zwei Ansichten des Innenbereiches des Filtergefäßes;
- Figuren 8A und 8B: zwei Schnittansichten des Filtergefäßes im unteren Bereich mit eingelegtem Filtereinsatz;
- Figuren 9 und 10: zwei Ansichten der Unterseite des Filtergefäßes;
- Figur 11: eine Schnittansicht auf den unteren Bereich des Filtergefäßes bei Befüllung einer Kanne;
- Figur 12: eine Schnittansicht durch das Filtergefäß im unteren Bereich bei der Befüllung von zwei Behältern, und
- Figuren 13 und 14: zwei Ansichten des Filtergefäßes beim Befüllen von einem oder zwei Bechern.

Ein Filtergefäß 1 aus Keramik, Kunststoff, Metall oder einem anderen geeigneten Material umfasst einen Innenraum, in den ein kegelstumpfartiger Filtereinsatz 2 einfügbar ist. Der Filtereinsatz 2 besteht aus einem wasserdurchlässigen Material, insbesondere aus einem Papier, wobei auch andere Filtermaterialien, wie Siebe oder Vliesstoffe, eingesetzt werden können. Das Filtergefäß 1 umfasst einen seitlich hervorstehenden Griff 3 für eine leichte Handhabung sowie im unteren Bereich einen Auflageteller 4, der einen nach unten gerichteten Rand 6 aufweist. In dem Auflageteller 4 ist eine Aussparung 5 vorgesehen, über den die exakte Positionierung des Filtergefäßes 1 und der Füllstand im Auffanggefäß überprüft werden kann. Statt der Aussparung 5 kann auch ein Sichtfenster vorgesehen sein. Zudem können auch mehrere Aussparungen 5 über den Umfang verteilt ausgebildet werden.

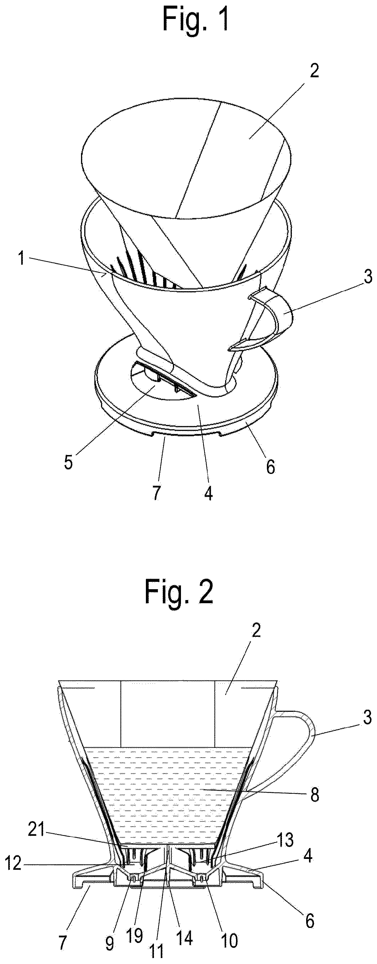

In Figur 2 ist das Filtergefäß 1 in einer befüllten Position gezeigt, wobei ein Filtereinsatz 2 seitlich an den schräg nach oben aufspreizenden Seitenwänden abgestützt ist. In dem Filtereinsatz 2 ist Kaffeemehl 8 und heißes Wasser vorgesehen, das die löslichen Feststoffe aus dem Kaffeemehl extrahiert. Der Filtereinsatz ist durchlässig für das so gebildete Filtrat, und die nicht löslichen Stoffe werden in dem Filtereinsatz zurückgehalten.

In dem unteren Bereich des Filtergefäßes 1 befindet sich eine erste Öffnung 9 und beabstandet hierzu eine zweite Öffnung 10 an einem Boden. Oberhalb der Öffnungen 9 und 10 ist jeweils ein Ablaufraum 12 und 13 gebildet, wobei die beiden Ablaufräume 12 und 13 über ein Trennelement in Form einer Trennwand 11 unterteilt sind. Auf der oberen Kante der Trennwand 11 liegt dabei eine Unterkante 21 des Filtereinsatzes 2 auf. Die Trennwand 11 ist dabei mittig in dem Filtergefäß 1 und an dem Filtereinsatz 2 angeordnet, so dass die Ablaufräume 12 und 13 im Wesentlichen mit der gleichen Menge an Filtrat versorgt werden.

An der Unterseite des Filtergefäßes 1 befinden sich an dem nach unten gerichteten Rand 6 Aussparungen 7, die zur Positionierung des Filtergefäßes dienen. Zudem ist zwischen den Öffnungen 9 und 10 ein nach unten hervorstehender Steg 14 angeordnet, der die Trennwand 11 nach unten hin verlängert und der über die Aussparung 5 sichtbar ist, um das Filtergefäß 1 besser positionieren zu können.

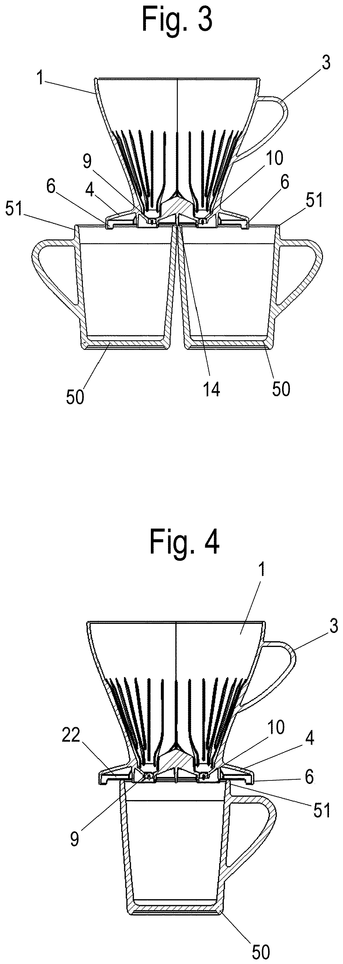

In Figur 3 ist das Filtergefäß 1 auf zwei Bechern 50 abgestellt. Das Filtergefäß 1 liegt dabei im Bereich von Aussparungen 7 an dem unteren Rand 6 auf einem oberen Rand 51 der Becher 50 auf. Zwischen den beiden Bechern 50 ist der nach unten hervorstehende Steg 14 angeordnet, so dass jedem Becher 50 eine der Öffnungen 9 und 10 zugeordnet ist.

In Figur 4 ist das Filtergefäß 1 nur auf einem Becher 50 positioniert, wobei die Öffnungen 9 und 10 beide oberhalb des Bechers 50 angeordnet sind. Das Filtergefäß liegt mit Stegen 22, die sich radial oder annähernd radial erstrecken, auf einem oberen Rand 51 des Bechers 50 auf.

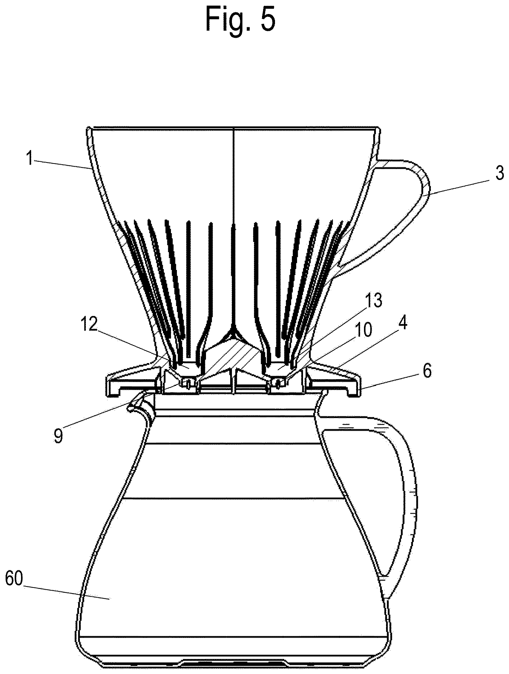

In Figur 5 ist das Filtergefäß auf einer Kanne 60 positioniert, wobei beide Öffnungen 9 und 10 oberhalb einer Öffnung der Kanne 60 angeordnet sind. Dadurch können auch größere Mengen von Kaffee in dem Filtergefäß 1 aufgebrüht und in der Kanne 60 gesammelt werden.

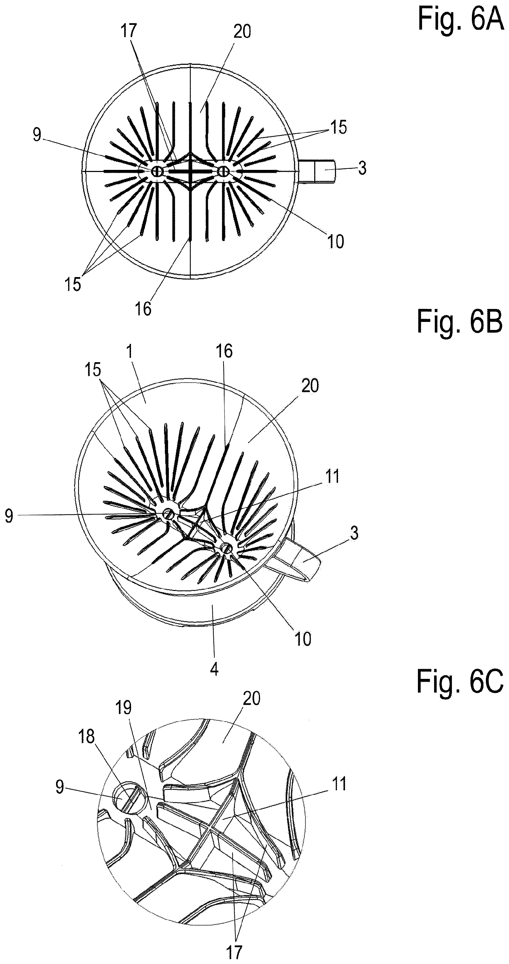

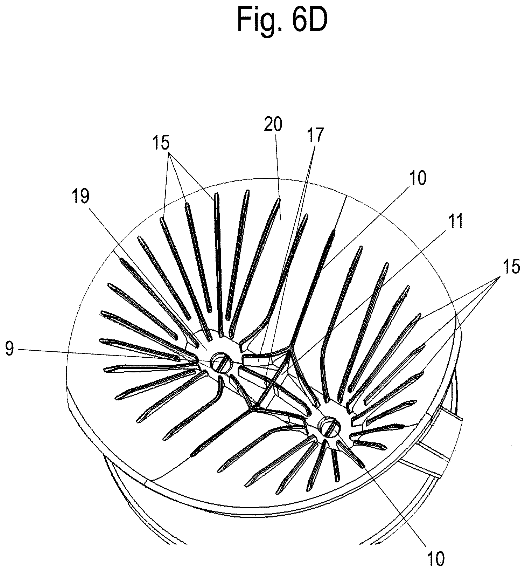

In den Figuren 6A bis 6D ist der Innenbereich des Filtergefäßes 1 im Detail gezeigt. An den nach außen auspreizenden Seitenwänden 20 des Filtergefäßes 1 sind Rippen 15 vorgesehen, die sich entlang der Seitenwand 20 zu den Öffnungen 9 und 10 hin erstrecken. Ferner sind an den Seitenwänden 20 in Verlängerung der Trennwand 11 Rippen 16 vorgesehen. An einem Boden 19 des Filtergefäßes sind Bodenrippen 17 vorgesehen, die sich von der Trennwand 11 zu den Öffnungen 9 oder 10 hin erstrecken. Entlang einer Ebene durch die Trennwand 11 und die Rippen 16 sind die übrigen Rippen 15 und Bodenrippe 17 symmetrisch angeordnet.

Wie in der vergrößerten Ansicht der Figur 6C zu sehen ist, befindet sich in der Öffnung 9 ein stegförmiges Leitelement 18, das dazu dient, ein seitliches Abtropfen aus der Öffnung 9 zu vermeiden. Ein entsprechendes Leitelement 18 ist auch in der Öffnung 10 angeordnet.

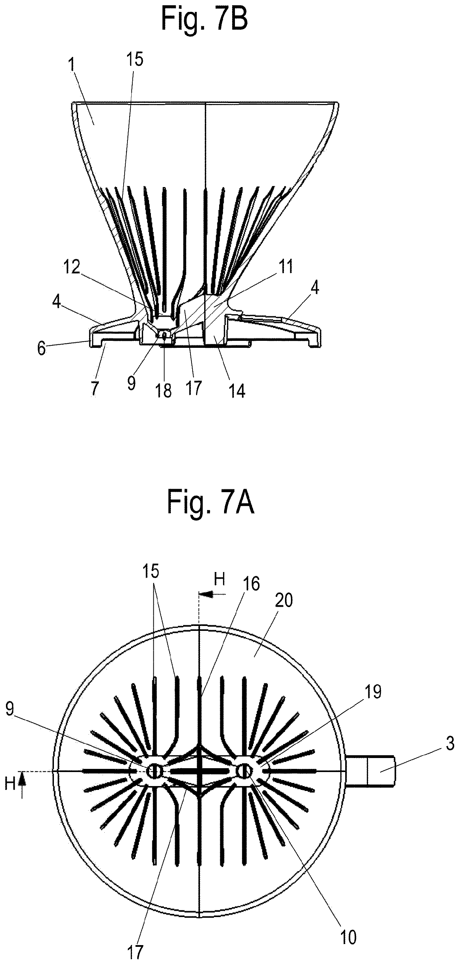

In den Figuren 7A und 7B ist das Filtergefäß gezeigt, das innerhalb der Seitenwände 20 in Draufsicht symmetrisch ausgebildet ist. Alle Rippen sind zumindest teilweise radial zu der Öffnung 9 ausgerichtet. Die Bodenrippen 17 fallen von der Trennwand 11 zu der Öffnung 9 hin ab, so dass die Trennwand 11 höher angeordnet ist als die Bodenrippen 17. Durch die Rippen 15, 16 und 17 kann der Filtereinsatz in dem Filtergefäß 1 gut abgestützt werden.

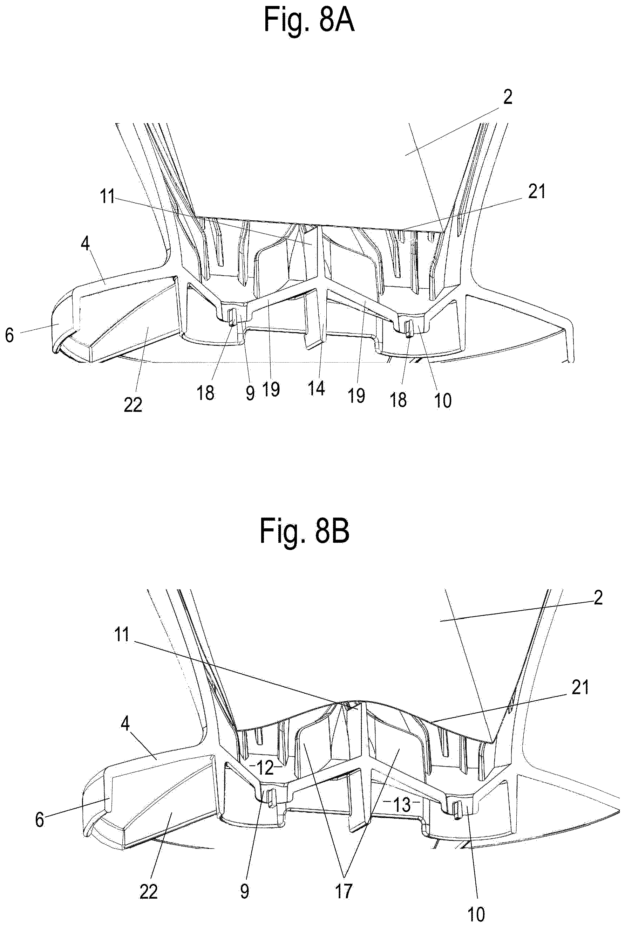

In Figur 8A ist der untere Bereich des Filtergefäßes mit einem Filtereinsatz 2 gezeigt, der mit einer Unterkante 21 auf der Trennwand 11 aufliegt. Wird der Filtereinsatz 2 nun mit Kaffeemehl gefüllt, biegt sich die Unterkante 21 benachbart zu beiden Seiten der Trennwand 11 nach unten in die Ablaufräume 12 und 13, die oberhalb der Öffnungen 9 und 10 angeordnet sind, wie dies in Figur 8B gezeigt ist. Durch die Trennwand 11 wird somit der Filtereinsatz 2 gegen ein Verrutschen gesichert und in zwei Bereiche unterteilt, die entweder oberhalb des Ablaufraumes 12 oder oberhalb des Ablaufraumes 13 angeordnet sind.

In Figur 8A ist zudem zu erkennen, dass der Boden 19 benachbart zu den Öffnungen 9 und 10 zur Horizontalen geneigt angeordnet ist, beispielsweise in einem Winkel zwischen 3° und 30°, insbesondere 5° bis 20°. Dadurch wird eine effektive Zuleitung des Filtrats zu den Öffnungen 9 und 10 gewährleistet. In den Öffnungen 9 und 10 ist jeweils ein stegförmiges Leitelement 18 angeordnet, das sich nach unten über die Wände der Öffnung 9 oder 10 erstreckt, um ein Ausleiten des Filtrates nach unten zu gewährleisten.

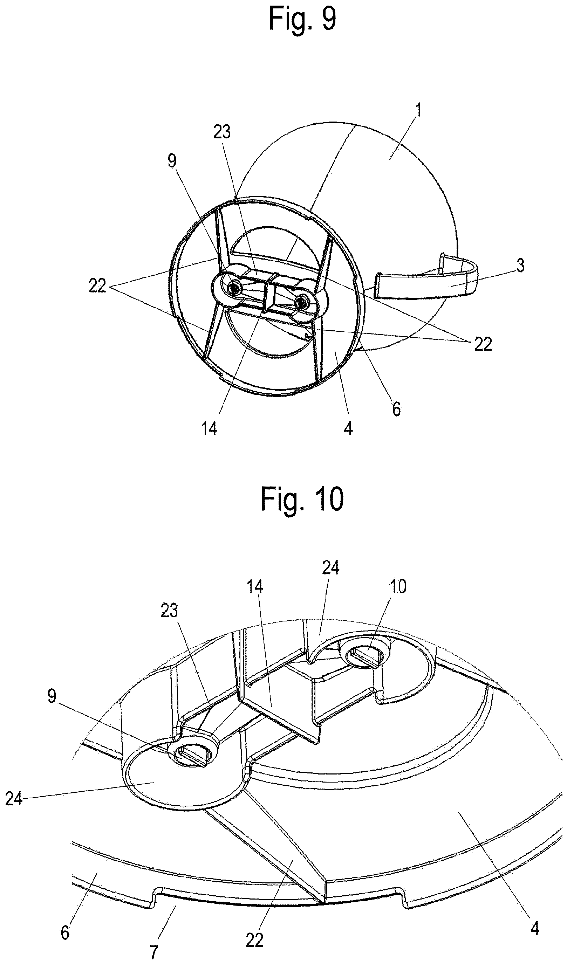

In den Figuren 9 und 10 ist das Filtergefäß 1 von unten gezeigt, und es ist erkennbar, dass der nach unten hervorstehende Rand 6 die beiden Öffnungen 9 und 10 ringförmig umgibt. Ferner befindet sich um jede Öffnung 9 und 10 eine nach unten hervorstehende rohrförmige oder U-förmige Rippe 24, die verhindert, dass beim Abstellen des Filtergefäßes auf eine ebene Oberfläche die Öffnung 9 und 10 zur Auflage kommt und kontaminiert wird. Die rohrförmige oder U-förmige Rippe 24 ist etwa auf derselben Höhe angeordnet wie der nach unten hervorstehende Rand 6. Von der rohrförmigen oder U-förmigen Rippe 24 erstreckt sich ein Steg 23 zu dem nach unten hervorstehenden Steg 14, der in Verlängerung der Trennwand 11 nach unten angeordnet ist. Dabei verbinden zwei beabstandete parallele Stege 23 die rohrförmige oder U-förmige Rippe 24 mit dem Steg 14, wobei die Stege 23 etwas nach oben versetzt angeordnet sind und somit eine Aufnahme ausbilden, in die ein Rand eines Behälters eingefügt werden kann. Die Höhe der Stege 23 entspricht etwa der Höhe des unteren Randes 6 im Bereich der Aussparungen 7.

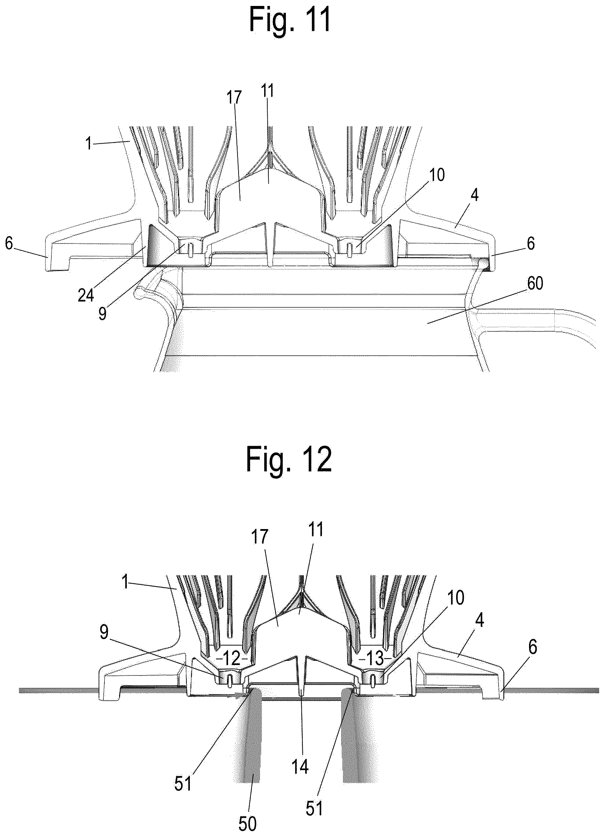

Die Funktion des Filtergefäßes im unteren Bereich wird in den Figuren 11 und 12 gezeigt. In Figur 11 befindet sich das Filtergefäß auf einer Kanne 60, wobei der nach unten hervorstehende Rand 6 den oberen Bereich der Kanne 60 übergreift und somit verhindert, dass das Filtergefäß 1 seitlich von der Kanne 60 verschoben werden kann. Der Rand 6 bildet somit einen Anschlag gegen eine Verschiebebewegung aus. Die Oberkante der Kanne liegt dabei auf den radialen Stegen 22 auf, die sich nicht exakt radial erstrecken müssen, sondern nur teilweise radial angeordnet sind und eine Auflagefläche für eine obere Kante der Kanne 60 ausbilden. Die Stege 22 befinden sich dabei etwa auf derselben Höhe wie der Rand 6 im Bereich der Aussparung 7 sowie die Stege 23.

In Figur 12 ist das Filtergefäß 1 auf zwei benachbarten Bechern 50 positioniert, wobei jedem Becher 50 eine Öffnung 9 oder 10 zugeordnet ist. Zwischen einem oberen Rand 51 der Becher ist der mittlere Steg 14 angeordnet. Der obere Rand 51 der Becher 50 liegt auf den Stegen 23 benachbart zu den Öffnungen 9 oder 10 auf und ist zudem durch die Aussparung 7 an dem Rand 6 durchgeführt, so dass das Filtergefäß 1 stabil auf den beiden Bechern 50 abgestützt ist. Die rohrförmigen oder U-förmigen Rippen 24, die weiter nach unten hervorstehen als der Steg 23, verhindern, dass das Filtergefäß 1 in seitliche Richtung über den Rand 51 verschoben werden kann.

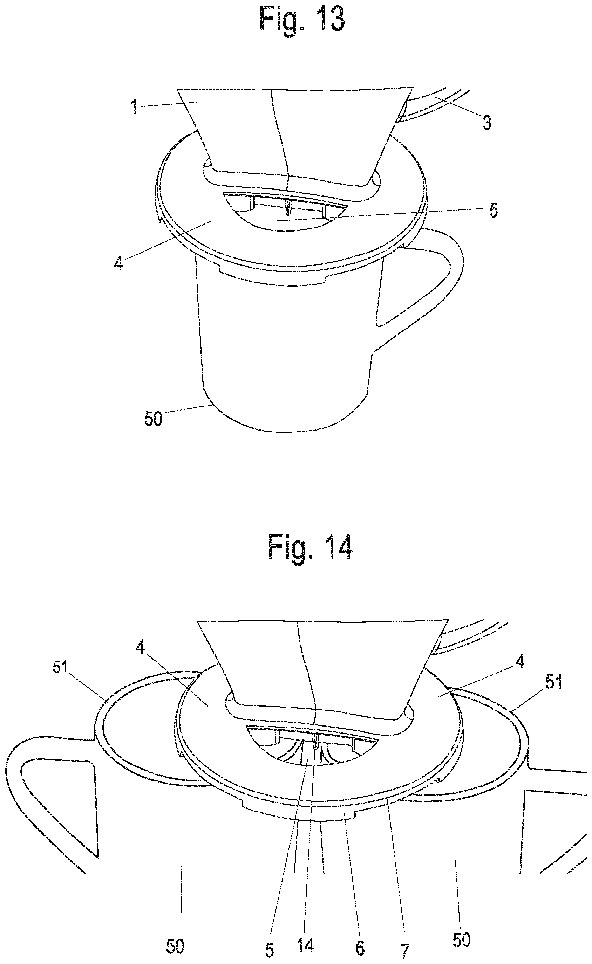

Wie in Figur 13 gezeigt ist, kann bei einem Abstellen des Filtergefäßes 1 auf einem Becher 50 über die Aussparung 5 beobachtet werden, ob sich die Öffnungen 9 und 10 innerhalb der rohrförmigen oder U-förmigen Rippe 24 oberhalb der Öffnung des Bechers 50 befinden. Die Stege 22 sorgen für ein ebenes Aufliegen des Filtergefäßes 1 auf dem Rand 51 des Bechers 50.

Wird das Filtergefäß auf zwei Bechern 50 abgestellt, wie dies in Figur 14 gezeigt ist, befindet sich der nach unten hervorstehende Steg 14 zwischen den beiden Bechern 50, was durch die Aussparung 5 beobachtet werden kann. Zudem liegt das Filtergefäß im Bereich der Aussparungen 7 auf dem oberen Rand 51, den Stegen 22 und dem Stegen 23 auf dem oberen Rand 51 auf. Auch in dieser Position ist das Filtergefäß 1 eben auf den beiden Rändern 51 der Becher 50 abgestützt.

In dem dargestellten Ausführungsbeispiel ist jedem Ablaufraum 12 oder 13 jeweils eine einzige Öffnung 9 oder 10 zugeordnet. Es ist natürlich möglich, statt der einen Öffnung 9 auch mehrere Öffnungen 9 oder 10 in jedem Ablaufraum 12 oder 13 vorzusehen. Die Anordnung einer größeren Öffnung hat allerdings den Vorteil, dass sich diese leichter reinigen lässt.

Zudem kann statt der Aussparung 5 auch ein Sichtfenster an dem Auflageteller 4 vorgesehen sein. Ein solches Sichtfenster oder eine weitere Aussparung kann auch an gegenüberliegenden Seiten des nach oben hervorstehenden Filtergefäßes vorgesehen sein.

### Bezugszeichenliste

- 1: Filtergefäß
- 2: Filtereinsatz
- 3: Griff
- 4: Auflageteller
- 5: Aussparung
- 6: Rand
- 7: Aussparung
- 8: Kaffeemehl
- 9: Öffnung
- 10: Öffnung
- 11: Trennwand
- 12: Ablaufraum
- 13: Ablaufraum
- 14: Steg
- 15: Rippe
- 16: Rippe
- 17: Bodenrippe
- 18: Leitelement
- 19: Boden
- 20: Seitenwand
- 21: Unterkante
- 22: Steg
- 23: Steg
- 24: Rippe
- 50: Becher
- 51: Rand
- 60: Kanne

## Patentansprüche

1. Filtergefäß (1) zur Aufnahme eines aus wasserdurchlässigem Material hergestellten Filtereinsatzes (2), der mit Kaffeemehl befüllbar ist, wobei das Filtergefäß (1) nach oben aufspreizende Seitenwände (20) und einen Boden (19) umfasst, an dem ein Filtrat durch mindestens zwei Öffnungen (9, 10) ablaufen kann, wobei in einem mittleren Bereich des Bodens (19) ein Trennelement (11) vorgesehen ist, das den Bereich oberhalb des Bodens (19) in zwei etwa gleich große Ablaufräume (12, 13) unterteilt, und jedem Ablaufraum (12, 13) mindestens eine Öffnung (9, 10) zum Ablaufen des Filtrats zugeordnet ist, **dadurch gekennzeichnet, dass** jeder Ablaufraum (12, 13) einen zu der Öffnung (9, 10) hin abfallenden Boden (19) aufweist.

2. Filtergefäß nach Anspruch 1, **dadurch gekennzeichnet, dass** beim Einlegen des Filtereinsatzes (2) eine Unterkante (1) des Filtereinsatzes (2) auf dem Trennelement (11) abstützbar ist.

3. Filtergefäß nach Anspruch 1 oder 2, **dadurch gekennzeichnet, dass** das Trennelement (11) als Trennwand ausgebildet ist.

4. Filtergefäß nach einer der Ansprüche 1 bis 3, **dadurch gekennzeichnet, dass** die Neigung des Bodens (19) zur Horizontalen in einem Winkel zwischen 3° und 30°, insbesondere 5° bis 20°, ist.

5. Filtergefäß nach einem der vorhergehenden Ansprüche, **dadurch gekennzeichnet, dass** an den aufspreizenden Seitenwänden (20) des Filtergefäßes (1) an der Innenseite zum Boden (19) hin erstreckende Rippen (15) vorgesehen sind.

6. Filtergefäß nach Anspruch 5, **dadurch gekennzeichnet, dass** die Rippen (15) zu einer vertikalen Ebene durch das Trennelement (11) symmetrisch angeordnet sind.

7. Filtergefäß nach einem der vorhergehenden Ansprüche, **dadurch gekennzeichnet, dass** mindestens eine Bodenrippe (17) von dem Trennelement (11) hin zu einer Öffnung (9, 10) gerichtet verläuft.

8. Filtergefäß nach Anspruch 7, **dadurch gekennzeichnet, dass** das Trennelement (11) höher ausgebildet ist als die Bodenrippe (17) benachbart zu dem Trennelement (11).

9. Filtergefäß nach einem der vorhergehenden Ansprüche, **dadurch gekennzeichnet, dass** in jeder Öffnung (9, 10) ein Leitelement (18) für das Filtrat vorgesehen ist.

10. Filtergefäß nach einem der vorhergehenden Ansprüche, **dadurch gekennzeichnet, dass** das Filtergefäß (1) an der Unterseite einen Auflageteller (4) aufweist, der einen nach unten gerichteten Rand (6) umfasst.

11. Filtergefäß nach Anspruch 10, **dadurch gekennzeichnet, dass** an dem Auflageteller (4) und/oder dem Rand (6) eine Aussparung (5) oder ein Sichtfenster vorgesehen ist.

12. Filtergefäß nach einem der vorhergehenden Ansprüche, **dadurch gekennzeichnet, dass** benachbart zu jeder Öffnung (9, 10) eine Aufnahme für einen Rand (51) eines Bechers (50) ausgebildet ist, wobei die Aufnahme etwa auf der gleichen Ebene liegt wie zwei zumindest teilweise radial ausgerichtete Stützstege (22).

13. Filtergefäß nach einem der vorhergehenden Ansprüche, **dadurch gekennzeichnet, dass** an der Unterseite des Filtergefäßes (1) ein nach unten hervorstehender Steg (14) zwischen den beiden Öffnungen (9, 10) vorgesehen ist, der sich vorzugsweise parallel zu dem Trennelement (11) erstreckt.

14. Filtergefäß nach einem der vorhergehenden Ansprüche, **dadurch gekennzeichnet, dass** um jede Öffnung (9, 10) an der Unterseite des Filtergefäßes (1) eine rohrförmige oder U-förmige Rippe (24) vorgesehen ist.

## Claims

1. Filter vessel (1) for reception of a filter insert (2), which is produced from water-permeable material and which is fillable with coffee grinds, wherein the filter vessel (1) has upwardly spreading side walls (20) and a base (19), at which a filtrate can drain through at least two openings (9, 10), wherein a separating element (11) is provided in a middle region of the base (19) and divides the region above the base (19) into two drain chambers (12, 13) of approximately the same size, and at least one opening (9, 10) for draining the filtrate is associated with each drain chamber (12, 13), **characterised in that** each drain chamber (12, 13) has a base (19) dropping away towards the opening (9, 10).

2. Filter vessel according to claim 1, **characterised in that** on insertion of the filter insert (2) a lower edge (1) of the filter insert (2) can be supported on the separating element (11).

3. Filter vessel according to claim 1 or 2, **characterised in that** the separating element (11) is constructed as a partition wall.

4. Filter vessel according to any one of claims 1 to 3, **characterised in that** inclination of the base (19) to the horizontal is at an angle between 3° and 30°, particularly 5° to 20°.

5. Filter vessel according to any one of the preceding claims, **characterised in that** ribs (15) extending towards the base (19) are provided at the spreading side walls (20) of the filter vessel (1) at the inner side.

6. Filter vessel according to claim 5, **characterised in that** the ribs (15) are arranged symmetrically with respect to a vertical plane through the separating element (11).

7. Filter vessel according to any one of the preceding claims, **characterised in that** at least one base rib (17) extends in direction from the separating element (11) towards an opening (9, 10).

8. Filter vessel according to claim 7, **characterised in that** the separating element (11) is constructed to be higher than the base rib (17) adjacent to the separating element (11).

9. Filter vessel according to any one of the preceding claims, **characterised in that** a guide element (18) for the filtrate is provided in each opening (9, 10).

10. Filter vessel according to any one of the preceding claims, **characterised in that** the filter vessel (1) has at the underside a support plate (4) comprising a downwardly directed edge (6).

11. Filter vessel according to claim 10, **characterised in that** a cut-out (5) or a viewing window is or are provided at the support plate (4) and/or the edge (6).

12. Filter vessel according to any one of the preceding claims, **characterised in that** a receptacle for an edge (51) of a mug (50) is formed adjacent to each opening (9, 10), wherein the receptacle lies at approximately the same plane as two at least partly radially oriented support webs (22).

13. Filter vessel according to any one of the preceding claims, **characterised in that** a downwardly projecting web (14) is provided at the underside of the filter vessel (1) between the two opening (9, 10) and preferably extends parallel to the separating element (11).

14. Filter vessel according to any one of the preceding claims, **characterised in that** a tubular or U-shaped rib (24) is provided around each opening (9, 10) at the underside of the filter vessel (1).

## Revendications

1. Récipient filtrant (1) destiné à recevoir une garniture filtrante (2) réalisée en un matériau perméable à l'eau pouvant être remplie de café moulu, le récipient filtrant (1) ayant des parois latérales (20) s'écartant vers le haut et un fond (19) sur lequel un filtrat peut s'évacuer par au moins deux ouvertures (9, 10), dans la zone médiane du fond (19) étant prévu un élément de séparation (11) qui subdivise la zone située au-dessus du fond (19) en deux chambres d'évacuation (12,13) essentiellement de même dimension, et à chaque chambre d'évacuation (12,13) étant associée au moins une ouverture (9, 10) permettant l'évacuation du filtrat, **caractérisé en ce que**
chaque chambre d'évacuation (12, 13) a un fond (19) descendant vers l'ouverture (9, 10).

2. Récipient conforme à la revendication 1,
**caractérisé en ce que**
lors de l'introduction de la garniture filtrante (2) le bord inférieur (1) de celle-ci peut s'appuyer sur l'élément de séparation (11).

3. Récipient filtrant conforme à la revendication 1 ou 2,
**caractérisé en ce que**
l'élément de séparation (11) est réalisé sous la forme d'une paroi de séparation.

4. Récipient filtrant conforme à l'une des revendications 1 à 3,
**caractérisé en ce que**
l'inclinaison du fond (19) par rapport à l'horizontale définit un angle compris entre 3° et 30°, en particulier entre 5° et 20°.

5. Récipient filtrant conforme à l'une des revendications précédentes,
**caractérisé en ce que**
sur la face interne des parois latérales (20) qui s'écartent du récipient filtrant (1) il est prévu, des nervures (15) s'étendant vers le fond (19).

6. Réservoir filtrant conforme à la revendication 5,
**caractérisé en ce que**
les nervures (15) sont disposées symétriquement par rapport au plan vertical passant par l'élément de séparation (11).

7. Récipient filtrant conforme à l'une des revendications précédentes,
**caractérisé en ce qu'**
au moins une nervure du fond (17) s'étend de l'élément de séparation (11) vers une ouverture (9, 10).

8. Récipient filtrant conforme à la revendication 7,
**caractérisé en ce que**
l'élément de séparation (11) est plus haut que les nervures du fond (17) à proximité de cet élément de séparation (11).

9. Récipient filtrant conforme à l'une des revendications précédentes,
**caractérisé en ce que**
dans chaque ouverture (9, 10) il est prévu un élément de guidage (18) du filtrat.

10. Récipient filtrant conforme à l'une des revendications précédentes,
**caractérisé en ce qu'**
il comporte sur sa face inférieure un plateau d'appui (4) qui comporte un bord (6) dirigé vers le bas.

11. Récipient filtrant conforme à la revendication 10,
**caractérisé en ce que**
sur le plateau d'appui (4) et/ou sur le bord (6) il est prévu un évidement (5) ou une fenêtre de visualisation.

12. Récipient filtrant conforme à l'une des revendications précédentes,
**caractérisé en ce qu'**
à proximité de chaque ouverture (9, 10) est prévu un logement de réception du bord (51) d'un gobelet (50), ce logement de réception étant essentiellement situé dans le même plan que deux barrettes d'appui (22) orientées au moins essentiellement radialement.

13. Récipient filtrant conforme à l'une des revendications précédentes,
**caractérisé en ce que**
sur la face inférieure du récipient filtrant (1) il est prévu, entre les deux ouvertures (9, 10) une barrette (14) faisant saillie vers le bas qui s'étend de préférence parallèlement à l'élément de séparation (11).

14. Récipient filtrant conforme à l'une des revendications précédentes,
**caractérisé en ce qu'**
autour de chaque ouverture (9, 10), il est prévu sur la face inférieure du récipient filtrant (1) une nervure (24) en forme de tube ou en forme du U.
